# EUROPÄISCHE PATENTANMELDUNG

(11) **EP 4 837 426 A1**
(43) Veröffentlichungstag der Anmeldung: **11.11.2026**
(21) Anmeldenummer: 25174166.6
(22) Anmeldetag: 05.05.2025
(51) Int. Cl.: A23J 1/14, A23J 3/14

(54) **VERFAHREN ZUR GEWINNUNG EINER PROTEINFRAKTION AUS ERBSEN UND ANDEREN HÜLSENFRÜCHTEN**

(71) Anmelder: Südstärke GmbH, 86529 Schrobenhausen (DE)
(72) Erfinder: Grandtner, Armin, 86529 Schrobenhausen (DE); Lang Halter, Evi, 86529 Schrobenhausen (DE); Czirnich, Per, 86529 Schrobenhausen (DE); Schellerer, Peter, 86529 Schrobenhausen (DE); Frank, Thomas, 86529 Schrobenhausen (DE); Dold, Jasmin, 85356 Freising (DE); Möllenhoff, Henrike, 85356 Freising (DE)
(74) Vertreter: Hoefer & Partner Patentanwälte mbB

(57) **Zusammenfassung**

Die vorliegende Erfindung betrifft ein Verfahren zur Gewinnung einer Proteinfraktion aus Hülsenfrüchten, umfassend die folgenden Schritte: a) Zerkleinern von Hülsenfrüchten sowie Zugabe von Wasser vor, während und/oder nach dem Zerkleinern, um eine Slurry mit zerkleinertem Hülsenfruchtmaterial herzustellen; b) Einstellen der Slurry mit zerkleinertem Hülsenfruchtmaterial auf eines pH-Wert im Bereich von etwa 7 bis 8,5; c) Fest-Flüssig-Trennung, um eine Flüssigphase mit gelöstem Hülsenfruchtprotein zu erhalten; d) Einstellung der Flüssigphase mit gelösten Hülsenfruchtprotein auf einen pH-Wert zwischen etwa pH 3 und pH 5,5; e) Hitzekoagulation bei einer Temperatur über 100°C, insbesondere etwa 105°C bis 120°C; f) Fest-Flüssig-Trennung, um hitzekoaguliertes Hülsenfruchtproteins als Festphase zu erhalten; g) gegebenenfalls Waschen der Festphase aus Schritt f) mit Wasser; h) Neutralisation einer Aufschlämmung der Festphase auf einen pH-Wert von etwa 6,5 und 7,5, insbesondere etwa 7; i) Trocknung der Aufschlämmung mittels Walzentrockung; j) gegebenenfalls Vermahlen des walzengetrockneten Materials auf die gewünschte Partikelgröße.

Weiterhin wird die Verwendung einer Kombination aus Hitzekoagulation und anschließender Walzentrocknung zur Beeinflussung des Geschmackes nach gekochten Erbsen bzw. Hülsenfrüchten (cooked pea flavor) einer Proteinfraktion aus Hülsenfrüchten einer Proteinfraktion aus Hülsenfrüchten.

## Beschreibung

Die vorliegende Erfindung betrifft die Gewinnung einer Proteinfraktion aus Erbsen und anderen Hülsenfrüchten oder Stärkeleguminosen.

### Hintergrund der Erfindung

Erbsen sind eine hervorragende pflanzliche Eiweißquelle. Dabei können stärkehaltige Bestandteile abgetrennt werden, um ein Produkt mit höherem Proteingehalt zu erhalten. Allgemein sind Hülsenfrüchte (von Körnerleguminosen) landwirtschaftlich genutzte Eiweißquellen, die eine signifikante Rolle für die menschliche Ernährung spielen.

Im Stand der Technik sind zahlreiche Verfahren zur Gewinnung von Proteinfraktionen aus Hülsenfrüchten, insbesondere Erbsen bekannt. Dabei ist die Entfernung des unerwünschten bitteren Geschmackes eine Aufgabe.

Beispielsweise offenbart die US 4,022,919 ein Verfahren zur Entfernung des Bittergeschmackes und des Erbsengeschmackes aus Erbsenmehl, wobei das Mehl mit feuchtem Dampf in Kontakt gebracht wird, und anschließend der Dampf und die verflüchtigten Erbsengeschmackskomponenten abgeführt werden. Der vorteilhafte Schritt einer dampfinduzierten Hitzekoagulation bei einer Temperatur oberhalb von 100°C in einem Autoklav wird näher beschrieben. Als Alternative zur dampfinduzierten Hitzekoagulation wird in der US 4,022,919 in Spalte 6 eine Entbitterung des Erbsenmehls durch herkömmliche Walzentrocknung einer wässrigen Aufschlämmung beschrieben. Es wird ausgeführt, dass sich dadurch zwar eine Entbitterung des Erbsenmehls erreichen lässt, jedoch der Erbsengeschmack nicht entfernt wird und zusätzlich ein Geschmack nach gekochten Erbsen (cooked pea flavour) entwickelt wird. Als weiterer Nachteil einer Walzentrocknung wird eine Braunverfärbung des walzengetrockneten Materials beschrieben. Die Rheologie der im Stand der Technik verfügbaren Proteinfraktionen, insbesondere in Bezug auf die Texturierfähigkeit z.B. bei der Verarbeitung zu Nahrungsmitteln ist zudem nicht optimal.

Es war Aufgabe der vorliegenden Erfindung, die Nachteile des Standes der Technik zu vermeiden und ein einfaches Verfahren zur Gewinnung einer Erbsenproteinfraktion (bzw. einer Proteinfraktion aus anderen Hülsenfrüchten) bereitzustellen, das die Entwicklung einer unerwünschten Sensorik verhindert oder minimiert, und eine unerwünschte (bräunliche) Verfärbung der getrockneten Proteinfraktion ebenfalls verhindert oder minimiert und eine vorteilhafte Texturierfähigkeit ermöglicht.

So betrifft ein erster Aspekt der vorliegenden Erfindung ein Verfahren zur Gewinnung einer Proteinfraktion aus Hülsenfrüchten (von Hülsenfrüchtlern bzw. Fabaceae), insbesondere von Körnerleguminosen, insbesondere Erbsen. Der Begriff Körnerleguminosen umfasst neben Erbsen (Pisum) insbesondere auch folgende Arten: Phaseolus-Arten (Phaseolus ssp.): Limabohne, Mondbohne, Teparybohne, Feuerbohne, Schminkbohne (Phaseolus coccineus L.), Gartenbohne (Phaseolus vulgaris L.), Platterbsen (Lathyrus), Sojabohne (Glycine max), Straucherbse (Cajanus cajan), Kichererbse (Cicer arietinum), Linse (Lens culinaris), Ackerbohne (Vicia faba), Vigna-Arten (Vigna ssp.), Augenbohne, (Vigna unguiculata), Adzukibohne, (Vigna angularis), Mungbohne, (Vigna mungo); Lupinen-Arten (Lupinus ssp.), Weiße Lupine (Lupinus albus), Anden-Lupine (Lupinus mutabilis), Gelbe Lupine (Lupinus luteus), Blaue Lupine (Lupinus angustifolius), Vielblättrige Lupine (Lupinus polyphyllus).

Im Folgenden werden die Hülsenfrüchte von Körnerleguminosen auch als "Hülsenfrüchte" bzw. "Hülsenfrucht" bezeichnet.

Das Verfahren gemäß dem ersten Erfindungsaspekt umfasst die folgenden Schritte:
a) Zerkleinern von Hülsenfrüchten sowie Zugabe von Wasser vor, während und/oder nach dem Zerkleinern, um eine Slurry mit zerkleinertem Hülsenfruchtmaterial herzustellen;
b) Einstellen der Slurry mit zerkleinertem Hülsenfruchtmaterial auf einen pH-Wert im Bereich von etwa 7 bis 8,5, insbesondere 7,7 bis 8,5;
c) Fest-Flüssig-Trennung, um eine Flüssigphase mit gelöstem Hülsenfruchtprotein zu erhalten;
d) Einstellung der Flüssigphase mit gelösten Hülsenfruchtprotein auf einen pH-Wert zwischen etwa pH 3 und pH 5,5;
e) Hitzekoagulation bei einer Temperatur über 100°C, insbesondere etwa 105°C bis 120°C;
f) Fest-Flüssig-Trennung, um hitzekoaguliertes Hülsenfruchtprotein als Festphase zu erhalten;
g) gegebenenfalls Waschen der Festphase aus Schritt f) mit Wasser;
h) Neutralisation einer Aufschlämmung der Festphase auf einen pH-Wert von etwa 6,5 und 7,5, insbesondere etwa 7;
i) Trocknung der Aufschlämmung mittels Walzentrockung;
j) gegebenenfalls Vermahlen des walzengetrockneten Materials auf die gewünschte Partikelgröße.

Es wurde überraschend gefunden, dass durch eine Kombination einer Hitzekoagulation mit einer anschließenden Walzentrocknung des hitzekoagulierten Materials wie hierin beschrieben gleichzeitig eine vorteilhafte Sensorik und Texturierfähigkeit der Hülsenfruchtproteinfraktion erzielt, wobei das Entstehen eines Geschmackes nach gekochten Erbsen bzw. Hülsenfrüchten (cooked pea flavour), minimiert oder verhindert werden kann.

Dies ist überraschend, zumal die Entstehung eines "cooked pea flavour" durch eine Walzentrocknung explizit in der US 4,022,919 beschrieben ist.

Es wird angenommen, ohne dass die vorliegende Erfindung hierauf beschränkt wäre, dass durch die Hitzekoagulation Veränderungen in Bezug auf Konformation und/oder Zusammensetzung der Hülsenfruchtproteinfraktion bewirkt werden, die bei einer anschließenden Walzentrocknung das Problem der Entwicklung eines "cooked pea flavour" überraschend verringern.

Ein zweiter Aspekt der vorliegenden Erfindung betrifft entsprechend die Verwendung einer Kombination aus Hitzekoagulation und anschließender Walzentrockung zum Erhalt einer Hülsenfruchtproteinfraktion mit geringem Geschmack nach gekochten Erbsen bzw. Hülsenfrüchten.

Als Ausgangsmaterial für das erfindungsgemäße Verfahren kann jedes im Stand der Technik beschriebene und kommerziell erhältliche Hülsenfruchtmaterial verwendet werden. Die auch als Gartenerbse oder Speiseerbse bekannte *Pisum sativum* wird bevorzugt verwendet und ist seit Jahrtausenden eine wichtige Nutzpflanze.

In einem ersten Schritt a) des erfindungsgemäßen Verfahrens werden die Hülsenfrüchte in herkömmlicher Weise zerkleinert. Dabei können jegliche dem Fachmann geläufige Verfahren und Vorrichtungen zur Zerkleinerung der Hülsenfrüchte verwendet werden. Das zerkleinerte Hülsenfruchtmaterial wird oft auch als sogenannte Hülsenfruchtreibsel bezeichnet.

Nach einer bevorzugten Ausführungsform der Erfindung wird die Zerkleinerung mit zuvor geschälten Hülsenfrüchte durchgeführt. Herkömmliche Verfahren zum Schälen der Hülsenfrüchte sind im Stand der Technik hinlänglich bekannt.

Vor dem Zerkleinern der Hülsenfrüchte kann auch ein Einweichen der gegebenenfalls zuvor geschälten Hülsenfrüchte in Wasser erfolgen. Durch einen solchen Einweichungsschritt kann die Zerkleinerung und der Aufschluss der Hülsenfrüchte im Zerkleinerungsschritt und in den nachfolgenden Verfahrensschritten erleichtert werden.

Vor, während und/oder nach dem Zerkleinern der Hülsenfrüchte wird Wasser zugegeben, um eine Slurry mit zerkleinertem Hülsenfruchtmaterial herzustellen. Ein Teil des Wassers kann auch aus dem zum Waschen oder Einweichen der Hülsenfrüchte, soweit durchgeführt, stammen.

Die Slurry mit zerkleinertem Hülsenfruchtmaterial wird anschließend auf einen pH-Wert im Bereich von etwa 7 bis etwa 8,5 eingestellt. Mit anderen Worten wird die Slurry in einen alkalischen Bereich gebracht, in dem die enthaltenen Hülsenfruchtproteine eine hohe Löslichkeit aufweisen. Damit die Hülsenfruchtproteine gut gelöst werden können, ist, nach einer bevorzugten Ausführungsform der Erfindung, ein Durchmischen der Slurry mit zerkleinertem Hülsenfruchtmaterial sowie eine gewisse Verweildauer nach der Einstellung des pH-Wertes im vorstehenden Bereich (und vor Durchführung des Trennungsschrittes c) vorteilhaft, beispielsweise 15 Minuten bis zwei Stunden. Nach einer bevorzugten Ausführungsform kann der pH-Wert im Bereich von etwa 7 bis etwa 8,5 auch bereits zum bzw. während des Zerkleinerns der Hülsenfrüchte (Schritt a) eingestellt werden, um Einwirkung und Durchmischung zu optimieren. Vorteilhafterweise kann auch das vor oder während des Zerkleinerns zugegebene Wasser auf einen pH-Wert im Bereich von etwa 7 bis etwa 8,5 eingestellt sein.

Anschließend erfolgt in Schritt c) eine Fest-Flüssig-Trennung, um eine Flüssigphase mit gelöstem Hülsenfruchtprotein zu erhalten. Eine Fest-Flüssig-Trennung ist ein verfahrenstechnischer Schritt, bei dem feste und flüssige Bestandteile eines Gemisches voneinander getrennt werden. Im Rahmen der vorliegenden Erfindung können alle dem Fachmann geläufigen Vorrichtungen zur Durchführung der Fest-Flüssig-Trennung verwendet werden. Mögliche Verfahren sind Dekantieren, Zentrifugieren oder Filtrieren. Nach einer bevorzugten erfindungsgemäßen Ausführungsform wird ein Dekanter verwendet. Die abgetrennte Festphase enthält beispielsweise Hülsenfruchtstärke, Ballaststoffe und andere Bestandteile der Hülsenfrüchte, die als wertvolle Nebenprodukte weiterverarbeitet und gegebenenfalls weiter aufgetrennt werden können.

Die in Schritt c) erhaltene Flüssigphase mit gelöstem Hülsenfruchtprotein wird gemäß Schritte d) auf einen pH-Wert zwischen etwa pH 3 und etwa pH 5,5, insbesondere etwa pH 4,5 eingestellt. Durch diese Ansäuerung der Flüssigphase wird ein Koagulieren der zuvor gelösten Hülsenfruchtproteine bewirkt.

Zudem wird gemäß Schritt e) eine Hitzekoagulation, insbesondere eine dampfinduzierte Hitzekoagulation bei einer Temperatur von etwa 100°C bis 120°C, insbesondere 105°C bis 120°C durchgeführt. Nach einer bevorzugten Ausführungsform wird der Hitzekoagulationsschritt mit heißem Dampf bei erhöhtem Druck, beispielsweise in einem Autoklav durchgeführt. Die Dauer der Hitzekoagulation ist erfindungsgemäß nicht weiter beschränkt, solange durch diesen Schritt, zusammen mit der Ansäuerung gemäß Schritt d) eine ausreichende Koagulation des Hülsenfruchtproteins erzielt wird, um diese im anschließenden Schritt f) über eine Fest-Flüssig-Trennung als Festphase abtrennen zu können. Wiederum kann jegliche herkömmliche, dem Fachmann geläufige Vorrichtung zur Fest-Flüssig-Trennung, insbesondere ein Dekanter oder dergleichen, verwendet werden.

Die erhaltene Festphase (hitzekoaguliertes Hülsenfruchtprotein) wird anschließend gegebenenfalls gewaschen, insbesondere mit Wasser, um unerwünschte lösliche Bestandteile wie beispielsweise Salze oder dergleichen weiter zu verringern oder auszuwaschen. Die Festphase, gegebenenfalls nach dem Waschschritt g), weist, je nach Durchführung, einen gewissen Wassergehalt auf und kann (nach Durchmischung) als Aufschlämmung der Phase bezeichnet werden. Vorteilhafterweise wird der Wassergehalt der Aufschlämmung der Festphase so eingestellt, dass eine gute Verarbeitung in den Schritten h) und i) des erfindungsgemäßen Verfahrens gut möglich ist. So wird gemäß Schritt h) die Aufschlämmung der Festphase auf einen pH-Wert von etwa 6,5 bis 7,5, insbesondere etwa 7, gebracht, d.h. die Aufschlämmung der Festphase neutralisiert.

Gemäß Schritt i) wird die Aufschlämmung dann einer Walzentrocknung unterworfen. Vorrichtungen zur Walzentrocknung sind im Stand der Technik bekannt und dem Fachmann geläufig. Im allgemeinen wird dabei das Material, in der Regel über eine Auftragswalze, auf die Oberfläche mindestens einer beheizten Trocknungswalze aufgebracht. Spätestens nach einer Walzendrehung wird es mit einem Schabemesser abgelöst.

Im Rahmen des vorliegenden Verfahrens wird dabei eine Walzenoberflächentemperatur im Bereich von etwa 120°C bis etwa 170°C bevorzugt.

Durch den Walzentrocknungsschritt kann vorteilhafterweise ein walzengetrocknetes Material erzeugt werden, das nur noch eine geringe Restfeuchte, beispielsweise von ≤ 10 Gew.% Wasser, bezogen auf die Gesamtmasse, aufweist.

Wie vorstehend ausgeführt wurde überraschend gefunden, dass durch die erfindungsgemäße Kombination einer Hitzekoagulation mit einer Walzentrocknung eine besonders vorteilhafte Sensorik der erhaltenen Proteinfraktion erhalten werden kann, insbesondere in Bezug auf die Minimierung oder Vermeidung eines sogenannten "cooked pea flavour", wie er gemäß des Standes der Technik bei einer Walzentrocknung einer Hülsenfruchtproteinfraktion (ohne vorherige Hitzekoagulation) auftritt. Ohne dass die Erfindung hierauf beschränkt wird, wird angenommen, dass die Hitzekoagulation das Hülsenfruchtproteinmaterial bezüglich der Konformation und Zusammensetzung der Bestandteile in vorteilhafter Weise auf eine Walzentrocknung vorbereitet, ohne dass der aus dem Stand der Technik als Problem bekannte "cooked pea flavour" in signifikanter Weise auftreten.

Die Erfindung wird nun anhand der folgenden Beispiele in nicht-beschränkender Weise beschrieben.

### Beispiele

### Beispiel 1 (erfindungsgemäß)

Getrocknete Erbsen (*Pisum sativum*) wurden in Wasser eingeweicht und in einer herkömmlichen Mühle zerkleinert, um Erbsenreibsel zu erhalten. Eine Slurry der Erbsenreibsel (80 Gew.-% Wasseranteil) wurde mit wässriger 10%iger NaOH-Lösung auf einen pH-Wert von 8,0 eingestellt. Es wurde eine Fest-Flüssig-Trennung in einem herkömmlichen Dekanter (Dekantierzentrifuge) durchgeführt, um eine Flüssigphase mit gelöstem Erbsenprotein zu erhalten. Die Flüssigphase mit gelösten Erbsenprotein wurde mit 10%iger wässriger HCl auf auf einen pH-Wert von 4,5 eingestellt und es erfolgte eine Hitzekoagulation bei einer Temperatur von 115°C.

Die 115°C wurden durch eine Dampfinjektion schlagartig erreicht, im kontinuierlichen Betrieb durch eine Förderleitung. Die anschließende Verweildauer ist daher nur die Zeit zwischen Dampfinjektion und Dekanter (siehe unten). Über einen Wärmetauscher kann die Verweildauer ausgedehnt werden, was in diesem Beispiel aber nicht durchgeführt wurde.

Danach erfolgte wiederum über einen herkömmlichen Dekanter (Dekantierzentrifuge) eine Fest-Flüssig-Trennung, um ein hitzekoaguliertes Erbsenproteins als Festphase zu erhalten. Die Festphase wurde aufgeschlämmt (75 Gew.-% Wasseranteil), und mit wässriger 10%iger NaOH-Lösung auf einen pH-Wert von 7,0 eingestellt. Danach erfolgte eine Walzentrocknung unter folgenden Bedingungen: 5 bar Dampfdruck (entspricht 150°C Oberflächentemperatur), 10 Upm der Trocknungswalze, dreifache Sumpfbelegung der Auftragswalzen, Abschaben des getrockneten Proteinfilms nach einer Umdrehung.

Der getrocknete Proteinfilm wurde von der Walze geschabt, vermahlen und auf einen Restfeuchtegehalt von 8 Gew.-% eingestellt. Der Proteingehalt lag bei etwa 80 Gew.% bezogen auf die Trockenmasse.

### Beispiel 2 (Vergleich):

Eine Flüssigphase mit gelöstem Erbsenprotein wurde wie im Beispiel 1 hergestellt und dann einer herkömmlichen Fällung bei pH 4,5 (mit Salzsäure eingestellt) ohne Hitzekoagulation wie in Beispiel 1 unterworfen, auf den gleichen Protein-Trockenmassegehalt eingestellt, und unter identischen Bedingungen wie in Beispiel 1 einer Walzentrocknung unterzogen.

### Beispiel 3 (Vergleich):

Eine neutralisierte Aufschlämmung der Festphase wurde wie in Beispiel 1 hergestellt und dann einer herkömmlichen Sprühtrocknung anstelle einer Walzentrocknung unterworfen.

### Beispiel 4 (Vergleich):

Eine Flüssigphase mit gelöstem Erbsenprotein wurde wie im Beispiel 1 hergestellt und dann einer herkömmlichen Fällung bei pH 4,5 (mit Salzsäure eingestellt) ohne Hitzekoagulation wie in Beispiel 1 unterworfen, auf den gleichen Protein-Trockenmassegehalt eingestellt, und dann einer herkömmlichen Sprühtrocknung anstelle einer Walzentrocknung unterworfen. Dieser Prozess ist in der Industrie der gängige Prozess und kann daher als "State-of-the-Art" beschrieben werden.

Die erhaltenen Proteinfraktionen aus den Beispielen 1 bis 4 (gleiche Restfeuchte (8 Gew.-%) und gleicher Proteingehalt von 80 Gew.-%) wurden auf Sensorik und rheologische Eigenschaften untersucht.

### Sensorik:

Zur Bestimmung bzw. Quantifizierung der Sensorik das Attribut "cooked pea flavor" sowohl in einer 2%igen Erbsenproteinlösung (w/w) in Wasser, als auch in einer Rezeptur Pflanzendrink (3% Protein (w/w)) von einem vorab nach dem Leitfaden DIN EN ISO 8586:2014-05 geschulten und geprüften Sensorikpanel geprüft. Es wurden drei Bewertungsdurchgänge durchgeführt, wobei die erhaltenen Ergebnisse gemittelt wurden. Die Angabe erfolgte auf einer Skala von 0 (kein "cooked pea flavour") bis 10 (sehr starker "cooked pea flavour"). Die Mittelwerte aus den drei Bestimmungen wurden jeweils auf ganze Zahlen gerundet.

Die Ergebnisse sind in Tabelle 1 unten zusammengefasst.

### Rheologie

Hier wurde die Texturierbarkeit (Extrusionsprozess zur Herstellung von Texturized Vegetable Proteins (TVPs) und High Moisture Extrudaten (HMEs)) und die Festigkeit der Texturate untersucht. Zur Ermittlung dieser Eignung bietet sich eine rheologische Messung in einem Closed-Cavity Rheometer (CCR) an. Dieses ursprünglich für die Kunststoffindustrie konzipierte Rheometer ist in der Lage, extrusionsähnliche Bedingungen zu schaffen, d.h. beispielsweise bei Temperaturen >100°C und bei Drücken von >1bar die rheologischen Eigenschaften von Materialien zu bestimmen. Für die durchgeführten Tests wurden die vorstehend beschriebenen Proteinfraktionen aus den Beispielen sowie drei kommerziell erhältlichen Produkten miteinander verglichen.

Zuerst wurden die Proteinfraktionen auf einen einheitlichen Proteingehalt von 70% Protein mit der Zugabe von Erbsenfasern eingestellt. Der Feuchtegehalt wurde auf 44,4% angeglichen. Dies ist eine gängige Rezeptur im Markt zur Produktion von Erbsenprotein TVPs. Zur Bestimmung der Eignung zur Texturierung wird diese im CCR nachgeahmt, indem das Protein erst für 60 sec bei 140°C bei einer Amplitude von 79,93% und einer Frequenz von 10Hz bei 4,5bar "geknetet" wird. Im Anschluss wird der Austritt aus der Extrusionsdüse simuliert, in dem das Produkt einer massiven Scherrate ausgesetzt wird (Amplitude: 4999,96% bei 0,4Hz). Dies führt zum Anstieg des Schubmoduls in der Messzelle. Je höher dieses Schubmodul ist, desto fester wird die Gelstärke im hergestellten Texturat sein. Die Ergebnisse zeigen, dass bei der erfindungsgemäßen Proteinfraktion das Schubmodul (Schermodul) und somit die Texturierfähigkeit am höchsten war. Die überlegene Texturierfähigkeit wurde auch im Scale-up Maßstab wurde ebenfalls bewiesen, sowohl auf einer HME, als auch auf einer TVP-Anlage. Hierbei konnten jeweils Texturate mit einer höheren Bissfestigkeit als auch einer höheren Elastizität hergestellt werden.

Gegenüber dem erfindungsgemäßen Beispiel 1 zeigt das Vergleichsbeispiel 2 eine deutlich geringere Texturierfähigkeit (Schubmodul 10,5 Pa gegenüber 13 Pa für Beispiel 1). Die Texturierfähigkeit von Vergleichsbeispiel 3 war etwas, die von Vergleichsbeispiel 4 deutlich (6,5 Pa) schlechter als im erfindungsgemäßen Beispiel 1.

**Tabelle 1 - cooked pea flavour**

| **Beispiel** | **cooked pea flavour (0 bis 10)** |
|---|---|
| Beispiel 1 (erf.) (HK + WT) | 0 |
| Beispiel 2 (Vergleich) (pHF + WT) | 5 |
| Beispiel 3 (Vergleich) (HK + ST) | 3 |
| Beispiel 4 (Vergleich) (pHF + ST) | 8 |

| | |
|---|---|
| HK = Hitzekoagulation; WT = Walzentrocknung; pHF = pH-Fällung; ST = Sprühtrocknung Rating des "cooked pea flavor"; 0 = abwesend; 10 = sehr stark | |

## Patentansprüche

1. Verfahren zur Gewinnung einer Proteinfraktion aus Hülsenfrüchten, umfassend die folgenden Schritte:
a) Zerkleinern von Hülsenfrüchten sowie Zugabe von Wasser vor, während und/oder nach dem Zerkleinern, um eine Slurry mit zerkleinertem Hülsenfruchtmaterial herzustellen;
b) Einstellen der Slurry mit zerkleinertem Hülsenfruchtmaterial auf eines pH-Wert im Bereich von etwa 7 bis 8,5;
c) Fest-Flüssig-Trennung, um eine Flüssigphase mit gelöstem Hülsenfruchtprotein zu erhalten;
d) Einstellung der Flüssigphase mit gelösten Hülsenfruchtprotein auf einen pH-Wert zwischen etwa pH 3 und pH 5,5;
e) Hitzekoagulation bei einer Temperatur über 100°C, insbesondere etwa 105°C bis 120°C;
f) Fest-Flüssig-Trennung, um hitzekoaguliertes Hülsenfruchtproteins als Festphase zu erhalten;
g) gegebenenfalls Waschen der Festphase aus Schritt f) mit Wasser;
h) Neutralisation einer Aufschlämmung der Festphase auf einen pH-Wert von etwa 6,5 und 7,5, insbesondere etwa 7;
i) Trocknung der Aufschlämmung mittels Walzentrockung;
j) gegebenenfalls Vermahlen des walzengetrockneten Materials auf die gewünschte Partikelgröße.

2. Verfahren nach Anspruch 1, wobei vor dem Zerkleinern gemäß Schritt a) ein Schälen und/oder Einweichen der Hülsenfrüchte in Wasser erfolgt.

3. Verfahren nach Anspruch 1 oder 2, wobei die Wasserzugabe gemäß Schritt a) bereits vor dem Zerkleinern erfolgt.

4. Verfahren nach einem der vorstehenden Ansprüche, wobei der pH-Wert in Schritt b) mittels NaOH eingestellt wird.

5. Verfahren nach einem der vorstehenden Ansprüche, wobei die Fest-Flüssig-Trennung gemäß der Schritte c) und f) mittels Dekanter erfolgt.

6. Verfahren nach einem der vorstehenden Ansprüche, wobei es sich bei der Hitzekoagulation insbesondere um eine dampfinduzierte Hitzekoagulation handelt.

7. Verfahren nach einem der vorstehenden Ansprüche, wobei die Neutralisation gemäß Schritt h) mittels verdünnter Natronlauge erfolgt und/oder die Einstellung des pH-Werts gemäß Schritt d) mittels verdünnter Salzsäure erfolgt.

8. Verfahren nach einem der vorstehenden Ansprüche, **dadurch gekennzeichnet, dass** die Aufschlämmung vor der Walzentrockung auf einen Trockensubstanz-Gehalt von etwa 18 bis 30 Gew.-%, insbesondere 22 bis 27 Gew.-%, bezogen auf die Gesamtmasse der Aufschlämmung, eingestellt wird.

9. Verfahren nach einem der vorstehenden Ansprüche, **dadurch gekennzeichnet, dass** die Walzentrockung mit einer Walzenoberflächentemperatur im Bereich von 120°C bis 170°C, insbesondere 150°C bis 165°C erfolgt.

10. Verfahren nach einem der vorstehenden Ansprüche, **dadurch gekennzeichnet, dass** die Walzentrocknung bis zu einem Restfeuchtegehalt von < 10 Gew.%, bezogen auf die Gesamtmasse des walzengetrockneten Materials, erfolgt.

11. Verfahren nach einem der vorstehenden Ansprüche, wobei die Vermahlung des walzengetrockneten Materials auf eine Partikelgröße von ≤ 200 µm, gemessen durch Siebanalyse, erfolgt.

12. Verfahren nach einem der vorstehenden Ansprüche, wobei die Hülsenfrucht von Stärkeleguminosen wie Erbse, Ackerbohne, Mungbohne, Kidneybohnen, Platterbsen, Augenbohne, insbesondere Erbse, verwendet wird.

13. Verwendung einer Kombination aus Hitzekoagulation und anschließender Walzentrockung zur Beeinflussung des Geschmackes nach gekochten Erbsen bzw. Hülsenfrüchten (cooked pea flavor) einer Proteinfraktion aus Hülsenfrüchten.

## Geänderte Patentansprüche

### Geänderte Patentansprüche gemäss Regel 137(2) EPÜ.

1. Verfahren zur Gewinnung einer Proteinfraktion aus Hülsenfrüchten, umfassend die folgenden Schritte:
a) Zerkleinern von Hülsenfrüchten sowie Zugabe von Wasser vor, während und/oder nach dem Zerkleinern, um eine Slurry mit zerkleinertem Hülsenfruchtmaterial herzustellen;
b) Einstellen der Slurry mit zerkleinertem Hülsenfruchtmaterial auf eines pH-Wert im Bereich von etwa 7 bis 8,5;
c) Fest-Flüssig-Trennung, um eine Flüssigphase mit gelöstem Hülsenfruchtprotein zu erhalten;
d) Einstellung der Flüssigphase mit gelösten Hülsenfruchtprotein auf einen pH-Wert zwischen etwa pH 3 und pH 5,5;
e) Hitzekoagulation bei einer Temperatur über 100°C, insbesondere etwa 105°C bis 120°C;
f) Fest-Flüssig-Trennung, um hitzekoaguliertes Hülsenfruchtproteins als Festphase zu erhalten;
g) gegebenenfalls Waschen der Festphase aus Schritt f) mit Wasser;
h) Neutralisation einer Aufschlämmung der Festphase auf einen pH-Wert von etwa 6,5 und 7,5, insbesondere etwa 7;
i) Trocknung der Aufschlämmung mittels Walzentrockung;
j) gegebenenfalls Vermahlen des walzengetrockneten Materials auf die gewünschte Partikelgröße.

2. Verfahren nach Anspruch 1, wobei vor dem Zerkleinern gemäß Schritt a) ein Schälen und/oder Einweichen der Hülsenfrüchte in Wasser erfolgt.

3. Verfahren nach Anspruch 1 oder 2, wobei die Wasserzugabe gemäß Schritt a) bereits vor dem Zerkleinern erfolgt.

4. Verfahren nach einem der vorstehenden Ansprüche, wobei der pH-Wert in Schritt b) mittels NaOH eingestellt wird.

5. Verfahren nach einem der vorstehenden Ansprüche, wobei die Fest-Flüssig-Trennung gemäß der Schritte c) und f) mittels Dekanter erfolgt.

6. Verfahren nach einem der vorstehenden Ansprüche, wobei es sich bei der Hitzekoagulation insbesondere um eine dampfinduzierte Hitzekoagulation handelt.

7. Verfahren nach einem der vorstehenden Ansprüche, wobei die Neutralisation gemäß Schritt h) mittels verdünnter Natronlauge erfolgt und/oder die Einstellung des pH-Werts gemäß Schritt d) mittels verdünnter Salzsäure erfolgt.

8. Verfahren nach einem der vorstehenden Ansprüche, **dadurch gekennzeichnet, dass** die Aufschlämmung vor der Walzentrockung auf einen Trockensubstanz-Gehalt von etwa 18 bis 30 Gew.-%, insbesondere 22 bis 27 Gew.-%, bezogen auf die Gesamtmasse der Aufschlämmung, eingestellt wird.

9. Verfahren nach einem der vorstehenden Ansprüche, **dadurch gekennzeichnet, dass** die Walzentrockung mit einer Walzenoberflächentemperatur im Bereich von 120°C bis 170°C, insbesondere 150°C bis 165°C erfolgt.

10. Verfahren nach einem der vorstehenden Ansprüche, **dadurch gekennzeichnet, dass** die Walzentrocknung bis zu einem Restfeuchtegehalt von < 10 Gew.%, bezogen auf die Gesamtmasse des walzengetrockneten Materials, erfolgt.

11. Verfahren nach einem der vorstehenden Ansprüche, wobei die Vermahlung des walzengetrockneten Materials auf eine Partikelgröße von ≤ 200 µm, gemessen durch Siebanalyse, erfolgt.

12. Verfahren nach einem der vorstehenden Ansprüche, wobei die Hülsenfrucht von Stärkeleguminosen wie Erbse, Ackerbohne, Mungbohne, Kidneybohnen, Platterbsen, Augenbohne, insbesondere Erbse, verwendet wird.

13. Verwendung einer Kombination aus Hitzekoagulation und anschließender Walzentrockung gemäß dem Verfahren von Anspruch 1 zur Beeinflussung des Geschmackes nach gekochten Erbsen bzw. Hülsenfrüchten (cooked pea flavor) einer Proteinfraktion aus Hülsenfrüchten.
